Europäisches Patentamt

(19) European Patent Office

Office européen des brevets

(11) Numéro de publication: **0 191 691**
**B1**

(12) **FASCICULE DE BREVET EUROPEEN**

(45) Date de publication du fascicule du brevet:
**11.05.88**

(21) Numéro de dépôt: **86400221.7**

(22) Date de dépôt: **03.02.86**

(51) Int. Cl.⁴: **B 03 B 9/06,** B 07 B 9/00, C 10 L 5/46

(54) Installation de traitement de déchets solides pour produire un combustible.

(30) Priorité: **13.02.85 FR 8502032**

(43) Date de publication de la demande:
**20.08.86 Bulletin 86/34**

(45) Mention de la délivrance du brevet:
**11.05.88 Bulletin 88/19**

(84) Etats contractants désignés:
**AT BE CH DE GB IT LI LU NL SE**

(56) Documents cités:
**EP - A - 0 082 815**
**FR - A - 1 538 500**
**FR - A - 2 265 457**
**FR - A - 2 322 660**
**FR - A - 2 487 221**

**AUFBEREITUNGS-TECHNIK, vol. 24, no. 12, décembre 1983, pages 710-713, Wiesbaden, DE; F.J. WYSS et al.: "Energie-Recycling durch Pelletisierung kalorisch hochwertiger Komponenten aus kommunalen Abfällen am Beispiel der Anlage Eastbourne/GB"**

(73) Titulaire: **OTV OMNIUM de TRAITEMENTS et de VALORISATION, Le Doublon 11 avenue Dubonnet, F-92407 Courbevoie (FR)**

(72) Inventeur: **Levasseur, Jean-Pierre, 18, Rue du Maréchal Galliéni, F-78100 ST. Germain-en-Laye (FR)**

(74) Mandataire: **Cuer, André, CABINET CUER 30, rue de Léningrad, F-75008 Paris (FR)**

ACTORUM AG

# Description

La présente invention concerne une installation de traitement de déchets solides, tels que des ordures ménagère, des déchets industriels et autres, pour l'obtention d'un combustible solide selon le préambule de la revendication 1. Elle concerne plus particulièrement une installation et un procédé visant à produire un combustible solide de caractéristiques prédéterminées à partir de déchets débarrassés de leur fraction organique fermentescible.

On connaît déjà, dans le domaine, de nombreuses installations de traitement de déchets par exemple de type ordures ménagères, pour l'obtention d'un combustible solide.

On connaît déjà en particulier, par les brevets français Nos 2 265 457 et 2 232 660, des installations de traitement dans lesquelles sont prévus des moyens pour soumettre les déchets à l'action d'un acide tel qu'un acide minéral. Ce type d'installation est cependant à la fois complexe et onéreux.

On connaît en outre, par le brevet français No 2487221, une installation de traitement de déchets ménagers pour produire des agglomérés combustibles et un compost dans laquelle est effectuée une séparation aéraulique à l'aide des gaz de sortie d'un séparateur à cyclone, la fraction solide disponible à la sortie de ce séparateur étant quant à elle soumise à un criblage suivi d'un déchiquetage.

On a déjà décrit par ailleurs une installation de production de combustibles solides à partir de déchets ménagers dans laquelle sont mises en œuvre des séries de moyens combinés de broyage, séparation magnétique et granulation à presse (E.F.J. Wyss & al., Aufbereitungstechnik, vol. 24, No 22, décembre 1983, pages 710-713).

La présente invention est basée sur un principe opératoire général de type sus-visé, mais elle vise tout spécialement à assurer notamment un traitement intermédiaire entre la séparation magnétique et la granulation, en combinant des moyens spécifiques destinés à assurer de manière efficace un séchage, une séparation des produits lourds et des fines minérales, le produit final étant apte à être directement mis sous forme de granulés ou autres agglomérés, sans broyage supplémentaire.

Sous sa forme générale, l'installation selon l'invention comprend une combinaison et successivement, de l'amont vers l'aval:

a) des premiers moyens de criblage pour séparer les matières organiques fermentescibles, de taille plus petite, de la partie restante des déchets, ou fraction combustible apte à être transformée en combustible;

b) des seconds moyens broyeurs agencés pour réduire encore la granulométrie de la fraction combustible;

c) des moyens de séchage pneumatique agencés pour réduire la teneur en eau de la fraction combustible et fournissant en sortie un courant gazeux chargé de ladite fraction combustible;

d) des moyens de séparation par gravité agencés pour séparer du courant gazeux des produits lourds;

e) des moyens de séparation à cyclone agencés pour séparer du courant gazeux la fraction combustible débarrassée desdits produits lourds, et

f) des seconds moyens de criblage agencés pour éliminer les fines minérales à haute teneur en cendres;

le pouvoir calorifique inférieur des granulés de combustible obtenus étant apte à être modifié selon les exigences en faisant varier la dimension des mailles des premiers et des seconds moyens de criblage.

L'invention sera mieux comprise à la lecture de la description suivante d'un mode de réalisation préféré de celle-ci, donnée à titre d'exemple et faite en référence au dessin annexé, sur lequel:

la figure 1 est une vue de côté schématique en coupe partielle d'une installation de traitement selon l'invention, et

la figure 2 est une vue de détail en coupe d'une partie de l'installation de la figure 1.

En référence au dessin, des ordures ménagères brutes contenues en vrac dans une trémie 10 sont amenées dans un broyeur 12, dans le cas présent à l'aide d'un mécanisme de transfert à grappin 14 et d'un convoyeur 15. Le broyeur 12, qui possède de façon appropriée une aptitude au déchiquetage, est agencé pour déchirer les sacs en matière plastique dans lesquels les ordures ménagères sont le plus souvent collectées, et pour donner auxdites ordures une texture relativement fine appropriée pour leur traitement ultérieur. En particulier, et comme on le verra en détail plus loin, un tel broyage donnera aux matières organiques broyées une texture qui favorisera leur fermentation (compostage), et à la fraction combustible une granulométrie qui facilitera sa transformation en combustible.

Après leur passage dans le broyeur 12, les ordures sont acheminées, dans le cas présent par un convoyeur à bande 16, vers un séparateur magnétique conventionnel, schématiquement indiqué en 18, qui est agencé pour assurer l'élimination des métaux ferreux. En effet, ce type de matière est bien entendu inapproprié tant pour le compostage que pour l'obtention de combustible. Les métaux ferreux récupérés en sortie du séparateur 18 pourront le cas échéant être recyclés.

Le broyat disponible en sortie du séparateur magnétique 18 et débarrassé des métaux ferreux est ensuite soumis à un criblage dans un crible 20. Ce criblage a pour objet de séparer la matière en une fraction organique fermentescible et en une fraction combustible. Il faut noter ici qu'une telle séparation est rendue possible par criblage du fait que les produits combustibles, après le broyage en 12, s'avèrent présenter une granulométrie sensiblement plus grossière que celle des matières organiques fermentescibles. Ainsi, les produits combustibles sont disponibles sous la forme du refus de criblage, tandis que les matières organiques fermentescibles, plus fines, sont récupérées après avoir traversé les mailles du crible 20. A titre indica-

tif, une dimension de mailles du crible 20 comprise entre 10 et 25 mm s'est avérée satisfaisante.

A la suite de cette étape de criblage, les matières organiques fermentescibles peuvent être soit mises en décharge, soit valorisées par compostage, de façon conventionnelle.

Le refus de criblage qui, comme on l'a dit, est apte à être converti en combustible est alors soumis au traitement de fabrication proprement dit.

Il faut noter ici que l'on dispose, dans l'étape de criblage en 20, d'une possibilité de réglage, c'est-à-dire d'une aptitude à favoriser l'une ou l'autre des fractions susmentionnées. Ainsi, en réduisant les dimensions des mailles du crible 20, on augmente la quantité du refus de criblage combustible tout en diminuant la quantité de matière fermentescible, ce qui permet d'obtenir à partir des ordures ménagères de départ une quantité de combustible plus importante. Inversement, en augmentant les dimensions des mailles du crible 20, on augmente la quantité de matières organiques fermentescibles tout en diminuant la quantité de produit combustible.

On notera cependant que, quoi qu'il arrive, les matières indésirables pour la fabrication du combustible, telles que le verre, la porcelaine, etc., sont broyées dans le broyeur 12 de manière à être éliminées avec la fraction fermentescible dans le crible 20. Ainsi, il est possible d'augmenter la fraction combustible sans pour autant accroître dans celle-ci la présence de telles matière «parasites».

Le traitement de fabrication du combustible proprement dit est décrit en détail ci-dessous.

La fraction à pouvoir calorifique inférieur élevé fournie en sortie du crible 20 sous la forme du refus de criblage, à la suite du traitement physique tel que décrit ci-dessus, est amenée, par des moyens non représentés et selon la flèche 21, dans une trémie tampon 22; celle-ci, on le comprend, donne à l'installation une plus grande souplesse d'utilisation.

Les matières contenues dans la trémie 22 sont amenées, dans le présent exemple à l'aide d'un grappin 24 ou analogue et d'un convoyeur 25, vers un broyeur-déchiqueteur 26. L'opération de broyage et de déchiquetage réalisée en 26 a pour objet d'abaisser la granulométrie du produit, notamment des matières textiles qu'il contient, souvent laissées intactes par le prétraitement décrit, de manière à faciliter son séchage ultérieur, son transport tout au long de la chaîne de traitement, et sa granulation en fin de traitement, comme on le verra plus loin. Des essais ont montré qu'une granulométrie de l'ordre de 30 à 50 mm est satisfaisante pour la suite du traitement.

A la suite du broyage-déchiquetage en 26, le produit est séché dans une unité de séchage 28. On constate en effet qu'à ce stade du traitement, le produit destiné à être transformé en combustible solide a une teneur en eau le plus souvent comprise entre 25 et 40%. Ainsi, en éliminant par séchage au moins une partie de cette eau, pour la ramener à des proportions inférieures à 15%, on obtient une augmentation sensible du pouvoir calorifique inférieur, une meilleure tenue mécanique du produit combustible une fois granulé comme décrit plus loin à la fin du traitement, ainsi qu'une possibilité de stockage du produit en minimisant les risques d'évolution de celui-ci notamment par fermentation.

Dans la présente forme de réalisation, l'unité de séchage 28 est du type pneumatique. Plus précisément, le produit fourni en sortie du broyeur-déchiqueteur 26 et acheminé vers l'entrée du sécheur 28 est véhiculé dans ce dernier par un fluide sécheur. On peut noter ici que le broyage préalable du produit en 26 favorise son transport par un tel fluide sécheur.

Ce fluide sécheur consiste, dans la présente forme de réalisation, en des gaz chauds inertes à une température de l'ordre de 500 à 600° C, fournis par un générateur globalement indiqué en 30. Comme on le verra plus en détail par la suite, ces gaz chauds sont obtenus par combustion d'une partie du combustible produit dans la présente installation.

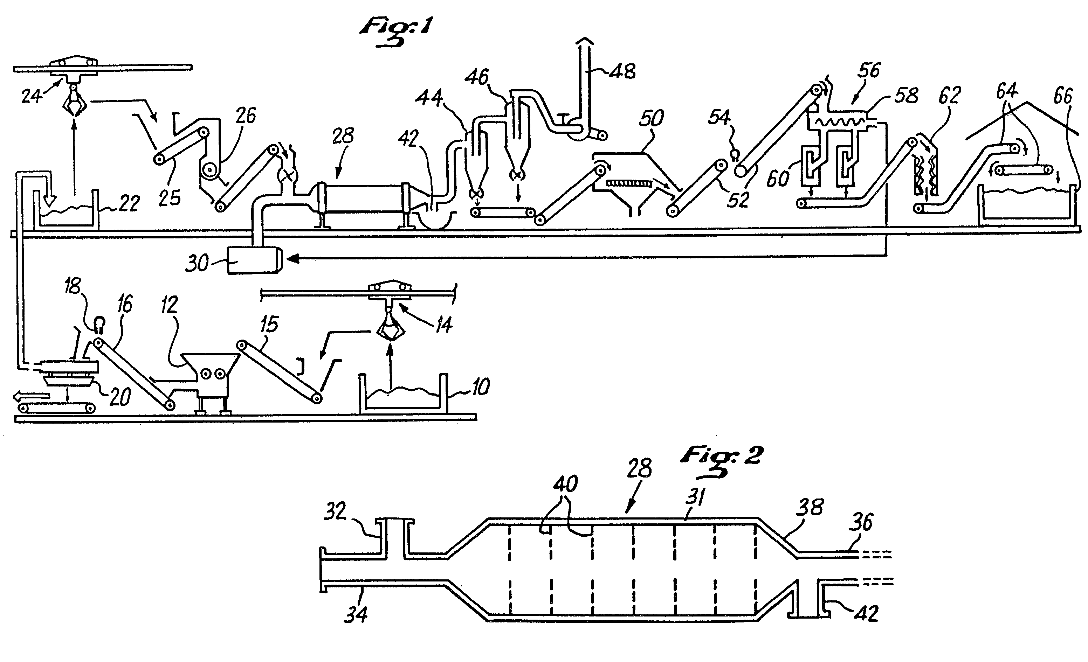

Comme le montre plus en détail la figure 2, le sécheur pneumatique 28 se présente sous la forme d'un carter cylindrique horizontal 31 muni à ses extrémités opposées respectivement d'une entrée de produit à sécher 32, d'une entrée coaxiale de gaz chauds 34 et d'une sortie coaxiale 36 située à l'extrémité libre d'un rétrécissement 38. A l'intérieur du carter 31 sont formées des chicanes radiales 40 formant un passage central unique, de façon conventionnelle.

En sortie du carter 31, le produit se présente sous la forme d'une phase solide en suspension dans une phase gazeuse. La séparation nécessaire de ces deux phases est effectuée de la manière suivante. Tout d'abord, au point le plus bas de la sortie du produit, c'est-à-dire, comme le montre la figure 2, dans la paroi inférieure de la sortie 36, est prévu un dispositif d'étanchéité tel que sas 42 ou équivalent. Le sas 42 est agencé pour extraire par gravité en cet endroit les éléments lourds impropres à la fabrication de combustible, tels que métaux non ferreux (non éliminés par le séparateur magnétique mentionné plus haut), cuir, caoutchouc, etc. En effet, il se trouve que ce type de produit, du fait de sa densité, ne peut pas être entraîné pneumatiquement par les gaz chauds, ce qui est mis à profit pour effectuer la séparation. Dans une installation expérimentale, on a constaté, de façon plus générale, que tous les produits d'une densité supérieure à 0,6 étaient évacués par le sas 42.

Après cette étape de séparation des lourds par le sas 42, les gaz chauds acheminant le reste du produit combustible sont introduits dans un séparateur à cyclone conventionnel 44, à l'extrémité inférieure duquel est récupéré le produit sec et, comme on l'a dit ci-dessus, exempt de corps lourds.

Les gaz chauds récupérés au sommet du séparateur à cyclone 44 sont introduits dans une unité de dépoussiérage 46, par exemple du type multicyclones, pour être ainsi rejetés vers l'atmosphère (par la cheminée indiquée en 48), avec ou sans traitement complémentaire, en se conformant aux normes et réglementations en vigueur, ou encore pour un recyclage éventuel.

Le produit sec disponible en sortie du séparateur 44 et du dépoussiéreur 46 est alors soumis à un criblage fin dans un crible 50. Ce criblage a pour objet d'éliminer les dernières fines minérales à haute teneur en cendres, bien entendu indésirables car inertes, qui se trouvent encore dans le produit.

Un tel criblage fin à ce stade du traitement présente les avantages suivants: le produit à cribler est à ce stade à l'état sec, ce qui facilite notablement son criblage; la teneur en cendres est, comme on l'a dit, avantageusement abaissée; et enfin il offre une possibilité de réglage du pouvoir calorifique inférieur du combustible final. En effet, si l'on fait varier la dimension des mailles du crible, il est possible d'obtenir en sortie (côté refus de criblage) un produit plus ou moins pur. Plus précisément, plus on augmente la maille, plus la proportion de fines minérales éliminée est grande, et plus le pouvoir calorifique inférieur du combustible est élevé, et inversement.

Ainsi, des essais ont démontré qu'il était possible, avec l'installation de la présente invention, d'obtenir des combustibles de pouvoir calorifique inférieur variant entre 15 000 et 21 000 kJ/kg, selon le réglage susmentionné.

Dans la présente forme de réalisation, mais de façon optionnelle, le produit en sortie du crible 50 est soumis, en un point intermédiaire d'un convoyeur 52, à une séparation complémentaire dans un séparateur magnétique, schématiquement indiqué en 54, afin d'éliminer les dernières particules de métal ferreux qui auraient échappé au séparateur magnétique 18 de début de traitement.

On peut noter que le combustible utilisé dans le générateur 30 pour l'obtention des gaz chauds de séchage peut être avantageusement constitué d'une faible partie du produit prélevé à différents endroits de la chaîne, en adaptant le générateur de gaz chauds à la nature du produit.

Le reste du produit est délivré, à l'extrémité de sortie du convoyeur 52, à l'entrée d'une unité de granulation, globalement indiquée en 56. L'unité 56 comprend tout d'abord une mélangeuse, schématiquement indiquée en 58, dans laquelle le produit est initialement homogénéisé. Une telle mélangeuse sera également utile dans le cas éventuel où l'on ajoute au produit combustible à granuler, obtenu de la manière décrite ci-dessus à partir des déchets de type ordures ménagères, un autre combustible, tel que bois, charbon, végétaux, à l'état sec. Il est à noter que la consistance du produit combustible à ce stade du traitement permet avantageusement un tel mélange avec cet autre combustible. Enfin la mélangeuse 58 a pour objet d'effectuer la répartition du produit sur des presses à granuler associées, indiquées en 60. De façon préférée, les presses 60 sont du type à rouleaux ou à filière, conventionnellement utilisées dans la granulation de produits végétaux ou autres.

A la sortie des presses, les granulés, encore à température relativement élevée sont refroidis dans le cas présent en traversant un refroidisseur à air 62. L'air chaud récupéré dans ce refroidisseur peut, si nécessaire, être recyclé vers le générateur 30 pour améliorer son rendement. De même, les fines récupérées au niveau du refroidisseur peuvent être recyclées vers la mélangeuse 58.

Les granulés en sortie du refroidisseur 62 peuvent être soumis à un tamisage (non illustré) pour éliminer les dernières fines, qui seront également recyclées vers la mélangeuse 58, avant d'être déposés à l'aide de moyens convoyeurs conventionnels 64 dans une trémie de stockage 66.

L'installation selon le présent mode de réalisation de l'invention a été expérimentée et a fourni les résultats suivants: pour 100 tonnes de déchets ménagers standard de départ, on a obtenu 28 tonnes de granulés de combustible solide d'une densité en vrac de l'ordre de 600 kg/m³, d'un taux d'humidité inférieur à 10%, d'une teneur en cendres de l'ordre de 18 à 20%, avec un pouvoir calorifique inférieur compris entre 15 000 et 15 900 kJ/kg. Le produit combustible était sans odeurs, non fermentescible, exempt de germes pathogènes et son stockage s'est avéré tout à fait aisé (simplement à l'abri de l'eau).

En outre, en augmentant la taille des mailles, notamment dans le second crible 50, on a obtenu, toujours pour 100 tonnes de déchets de départ, 20 tonnes de granulés d'une densité en vrac de l'ordre de 600 kg/m³ (inchangée), d'un taux d'humidité inférieur à 10% (également inchangé), mais d'une teneur en cendres de l'ordre de 15 à 18%, avec un pouvoir calorifique inférieur sensiblement accru et compris entre 19 200 et 20 100 kJ/kg.

**Revendications**

1. Installation pour l'obtention d'un combustible solide à partir de déchets des types ménagers, industriels ou analogues, du genre comprenant, à l'entrée, des premiers moyens broyeurs (12) suivis de moyens de séparation magnétique (18), et, à la sortie, des moyens de granulation à presses (56) pour l'obtention de granulés combustibles, caractérisée par le fait qu'après lesdits moyens de séparation magnétique (18), elle comprend en combinaison, et successivement de l'amont vers l'aval:

a) des premiers moyens de criblage (20) pour séparer les matières organiques fermentescibles, de taille plus petite, de la partie restante des déchets, ou fraction combustible, apte à être transformée en combustible;

b) des seconds moyens broyeurs (26) agencés pour réduire encore la granulométrie de la fraction combustible;

c) des moyens de séchage pneumatique (28) agencés pour réduire la teneur en eau de la fraction combustible, et fournissant en sortie un courant gazeux chargé de ladite fraction combustible;

d) des moyens de séparation par gravité (42) agencés pour séparer du courant gazeux des produits lourds;

e) des moyens de séparation à cyclone (44) agencés pour séparer du courant gazeux la fraction combustible débarrassée desdits produits lourds, et

f) des seconds moyens de criblage (50) agencés pour éliminer les fines minérales à haute teneur en cendres;

le pouvoir calorifique inférieur des granulés de combustible obtenus étant apte à être modifié selon les exigences en faisant varier la dimension des mailles des premiers (20) et des seconds (50) moyens de criblage.

2. Installation selon la revendication 1, caractérisée par le fait que les moyens de séchage pneumatique (28) reçoivent à une entrée (34) des gaz chauds de séchage fournis par un générateur (30) alimenté par une partie du combustible disponible en aval des moyens de séchage (28).

3. Installation selon la revendication 2, caractérisée par le fait que la température des gaz chauds fournis par le générateur (30) est comprise entre 500 et 600°C.

4. Installation selon l'une quelconque des revendications 1 à 3, caractérisée par le fait que les moyens de séparation par gravité comprennent un sas (42) prévu dans la paroi inférieure d'une conduite de sortie (36) des moyens de séchage pneumatique (28).

5. Installation selon l'une quelconque des revendications 1 à 4, caractérisée par le fait qu'elle comprend en outre, à la sortie des moyens de granulation (56), des moyens refroidisseurs à air (62).

6. Installation selon la revendication 5, caractérisée par le fait que de l'air chaud disponible à la sortie des moyens refroidisseurs (62) est recyclé vers les moyens sécheurs (28, 30).

7. Installation selon l'une quelconque des revendications 1 à 6, caractérisée par le fait que les moyens de séparation à cyclone comprennent une unité de dépoussiérage (46).

**Patentansprüche**

1. Anlage zur Erzeugung eines festen Brennstoffes aus haushälterischen, industriellen o. dgl. Abfällen, der Gattung, nach welcher sie am Eingang erste Mahlmittel (12), nachgeschaltete magnetische Trennungsmittel (18) und am Ausgang Granulierungsmittel (56) mit Pressen zur Erzeugung brennbarer Granulaten umfasst, dadurch gekennzeichnet, dass sie nach den genannten magnetischen Trennungsmitteln (18) die folgenden nacheinander geschalteten Mittel in Kombination umfasst:

a) erste Siebungsmittel (20) zur Abscheidung der gärungsfähigen organischen Stoffen mit kleinerer Korngrösse aus dem übrigen Teil oder brennbaren Anteil der Abfällen, welcher zur Umwandlung in Brennstoff geeignet ist;

b) zweite, zur weiteren Verminderung der Korngrösse des brennbaren Anteils angeordnete Mahlmittel (26);

c) pneumatische, zur Verminderung des Wassergehalts des brennbaren Anteils angeordnete Trocknungsmittel (28), welche einen mit dem genannten brennbaren Anteil beladenen Gasstrom am Ausgang liefern;

d) Mittel (42) zur Trennung nach Gleichfälligkeit, welche zur Abscheidung des Gasstroms aus der schweren Stoffen angeordnet sind;

e) Zyklonabscheidungsmittel (44), welche zur Abscheidung aus dem Gasstrom des von den genannten schweren Stoffen freigemachten brennbaren Anteils angeordnet sind, und

f) zweite, zur Beseitigung des Mineralstaubes mit hohem Aschengehalt angeordnete Siebungsmittel (50);

wobei der spezifischer Brennwert der erhaltenen Brennstoffgranulaten zwangsläufig durche die Veränderung der Maschengrösse der ersten (20) und zweiten (50) Siebungsmittel verändert werden kann.

2. Anlage nach Anspruch 1, dadurch gekennzeichnet, dass die pneumatischen Trocknungsmittel (28) an einem Einlass (34) heisse, durch einen Generator (30) gelieferte Trocknungsgase empfangen, welcher vom einem Teil des unterhalb der Trocknungsmittel (28) verfügbaren Brennstoffes gespeist wird.

3. Anlage nach Anspruch 2, dadurch gekennzeichnet, dass der Temperatur der durch den Generator (30) gelieferten Heissgase zwischen 500 und 600°C liegt.

4. Anlage nach irgendeinem der Ansprüche 1 bis 3, dadurch gekennzeichnet, dass die Mittel zur Trennung nach Gleichfälligkeit eine in der unteren Wandung einer Auslassleitung (36) der pneumatischen Trocknungsmittel (28) vorgesehene Schleuse (42) enthalten.

5. Anlage nach irgendeinem der Ansprüche 1 bis 4, dadurch gekennzeichnet, dass sie weiterhin Luftkühlungsmittel (62) am Ausgang der Granulierungsmittel (56) enthält.

6. Anlage nach Anspruch 5, dadurch gekennzeichnet, dass am Ausgang der Kühlungsmittel (62) verfügbare heisse Luft nach den Trocknungsmittel (28, 30) zurückgeführt wird.

7. Anlage nach irgendeinem der Ansprüche 1 bis 6, dadurch gekennzeichnet, dass die Zyklonabscheidungsmittel eine Entstaubungseinheit (46) umfassen.

**Claims**

1. Apparatus for obtaining a solid fuel from residential, industrial or similar types of wastes, of kind comprising at the input first grinding means (12) followed by magnetic separation means (18) and, at the output, press grinding means (56) for obtention of fuel granules, characterized by the apparatus, after the said magnetic separation means (18), comprises in combination and successively, from up-stream to down-stream:

(a) first screening means (20) to separate smaller-sized fermentable organic materials from the rest of the wastes, or combustible fraction, able to be transformed into fuel;

(b) second grinding means (26) designed to reduce the size of the fuel fraction still further;

(c) pneumatic drying means (28) designed to reduce the water content of the fuel fraction and outputting a gas stream charged with said fuel fraction;

(d) gravity separation means (42) designed to separate from the gas stream the heavy products contained in the fuel fraction;

(*e*) cyclone separation means (44) designed to from the gas stream the fuel fraction freed of said heavy products; and

(*f*) second screening means (50) designed to eliminate the inorganic fines having a high ash content;

the inferior calorific value of the resulting fuel granules being able to be modified to meet the requirements by varying the mesh size of the first (20) and second (50) screening means.

2. Apparatus according the Claim 1, wherein the pneumatic drying means (28) receive at an input (34) hot drying gases supplied by a generator (30) fed by a part of the fuel available donwstream from the drying means (28).

3. Apparatus according the Claim 2, wherein the temperature of the hot gases supplied by the generator (30) is between 500 and 600°C.

4. Apparatus according anyone of the Claims 1 to 3, wherein the gravity separation means comprise an isolation trap (42) provided in the lower wall of an output duct (36) of the pneumatic drying means (28).

5. Apparatus according anyone of the Claims 1 to 4, wherein it includes in addition air cooling means (62) at the output of the granulating means (56).

6. Apparatus according the Claim 5, wherein hot air available at the output of the cooling means (62) is recycled to the drying means (28, 30).

7. Apparatus according anyone of the Claims 1 to 6, wherein the cyclone separation means comprise a dust removal unit (46).

Fig.1

Fig.2

0 191 691